Europäisches Patentamt

European Patent Office

Office européen des brevets

(11) Veröffentlichungsnummer: **0 233 477**

**A1**

(12) # EUROPÄISCHE PATENTANMELDUNG

(21) Anmeldenummer: 87100540.1

(22) Anmeldetag: 16.01.87

(51) Int. Cl.³: **C 04 B 26/04**
**E 04 B 1/82**
//(C04B26/04, 14:38, 24:26, 24:30, 24:38)

(30) Priorität: 24.01.86 CH 278/86

(43) Veröffentlichungstag der Anmeldung:
26.08.87 Patentblatt 87/35

(84) Benannte Vertragsstaaten:
DE FR GB

(71) Anmelder: FIBRACONSULT MANAGEMENT UND BERATUNGS AG
Niklaus-Konrad-Strasse 25
CH-4500 Solothurn(CH)

(72) Erfinder: Kalbskopf, Reinhard
Birkenweg 434
CH-4803 Vordemwald(CH)

(74) Vertreter: EGLI-EUROPEAN PATENT ATTORNEYS
Horneggstrasse 4
CH-8008 Zürich(CH)

(54) Akustische Dämmplatte.

(57) Die akustische Dämmplatte enthält granulierte Mineralwolle und Füll- sowie Bindemittel. Das Bindemittel ist ein Tensid-freies, Polyvinylalkohol-stabilisiertes Polymer, dem ein Thixotropiermittel sowie Phenolformaldehydharz beigemischt sind.

In dem noch weichem Material einer solchen Platte lässt sich ein dreidimensionales Muster scharf ausbilden, wobei die glatte Oberfläche der aus dieser Masse hergestellten Platte sich ohne weiteres nass reinigen lässt.

EP 0 233 477 A1

0233477

## Akustische Dämmplatte

Die vorliegende Erfindung betrifft eine akustische Dämmplatte. welche granulierte Mineralwolle sowie Füllstoffe und Bindemittel enthält.

Akustische Dämmplatten. welche granulierte Mineralwolle enthalten, weisen eine ausserordentlich hohe Fähigkeit zur Schalldämmung auf. Aus diesem Grund stellen solche Platten eine bevorzugte Art von akustischen Dämmplatten dar. Solche Platten sind beispielsweise aus US-PS 3.246.063 bekannt. Zur Herstellung einer solchen Platte wird eine viskose Masse zubereitet, welche etwa 25 Gew % granulierte Mineralwolle und etwa 75 Gew % eines Bindemittelbreis enthält. Der Bindemittelbrei besteht aus 5 Gew % Ton, 5 Gew % Stärke und 90 % Wasser. Diese viskose Masse wird in flache Formen gegossen und dort ausgebreitet. sodass plattenförmige Gebilde entstehen. Diese Rohplatten werden dann getrocknet. Wenn die Platten als Schallschluckelemente. beispielsweise in abgehängten Decken verwendet werden sollen. dann sollten sie eine ästhetisch ansprechende Oberfläche aufweisen. Da die viskose Masse jedoch elastisch und zudem noch klebrig ist, kann die Oberfläche mit nur groben Mustern versehen werden. Solche Muster entstehen beispielsweise durch Abrakeln der Oberfläche einer noch weichen Plattenmasse oder mit Hilfe einer mit groben Zähnen versehenen Walze. In beiden Fällen entsteht eine Platte mit einer rauhen und sehr unregelmässigen Oberfläche, die nicht als ästhetisch ansprechend bezeichnet werden kann oder die zumindest nur eine sehr begrenzte Auswahl an Dekoren zulässt. Eine rauhe Oberfläche ist bei einer solchen Dämmplatte auch deswegen unerwünscht, weil es möglich sein soll, die Platte, wenn sie verschmutzt ist, durch feuchtes Abwischen zu reinigen. Dies ist nicht möglich, wenn die Mineralwollenfasern die Oberfläche der Platte durchstossen.

Die Aufgabe der vorliegenden Erfindung ist, eine Dämmplate anzugeben, welche die genannten Nachteile nicht aufweist. Es soll somit eine akustische Dämmplatte angegeben werden, deren Oberfläche sich mittels einer gewöhnlichen Prägewalze dauerhaft verformen lässt, die eine glatte und geschlossene Oberfläche aufweist und die gegen Wasser und Wasserdampf praktisch unempfindlich ist.

Diese Aufgabe wird bei der Platte der eingangs genannten Art erfindungsgemäss so gelöst, wie dies im kennzeichnenden Teil des Anspruchs 1 definiert ist.

Nachstehend werden Ausführungsbeispiele der vorliegenden Erfindung näher beschrieben.

Die vorliegende Dämmplatte enthält als ihren Hauptbestandteil granulierte Mineralwolle in einer Menge, welche im trockenen Zustand der Platte zwischen 50 bis 75 Gew % liegt. Ferner enthält diese Platte Füllstoffe in einer Menge von 10 bis 25 Gew % sowie weitere Komponenten. Bei der Herstellung der Platte werden die festen Komponenten mit einem Bindemittelbrei vermischt, aus dieser Masse wird eine Schicht geformt, welche geprägt wird, und nach dem Trocknen und dem Härten des Bindemittels nimmt die Masse die Gestalt von Platten an.

Es hat sich gezeigt, dass die Anforderungen, die an die Dauerverformbarkeit der noch nicht ausgehärteten Plattenmasse gestellt werden, nur dann erreicht werden können, wenn der Bindemittelbrei hoch tnixotrop ist. Dies bedeutet, dass der Bindemittelbrei während der Prägung unter Einfluss von Scherkräften leicht plastisch verformbar ist und dass dieser nach der Beendigung der Prägung die ihm gegebene Form beibehält und sich somit nicht etwa durch Fliessen unter der Last des Eigengewichtes weiter verformt. Um eine gute Verarbeitbarkeit des noch weichen Plattenmaterials zu gewährleisten, darf die Viskosität desselben 1000 bis 1200 cp - Messung nach Brookfiled, Spindel 3, - dabei nicht überschreiten und sie darf diesen Bereich aber auch nicht wesentlich unterschreiten. Die gewünschte Viskosität der Plattenmasse wird durch Mischung derselben mit geeigneten Hilfsmitteln eingestellt, welche diese Masse thi-

xotrop machen. Als Thixotropiermittel dient vorteilaft Xantan-Gummi. Es können jedoch auch andere bekannte Thixotropiermittel verwendet werden.

Eine weitere wichtige Anforderung an die verformbare Masse betrifft ihr Verhalten bei der Formgebung, also z.B. bei der Prägung mittels einer Walze. Zwar kann durch geeignete Wahl des Walzmaterials, etwa Silikongummi, die Haftung der Masse an der Walze verringert werden. Trotzdem erweisen sich gel-förmige Bindemittel, etwa Stärkegel, als gänzlich ungeeignet, da ihre Klebekraft stets viel zu gross ist, um eine saubere Ablösung der Masse von der Prägewalze zu erlauben.

Es ist deshalb notwendig, bei der Herstellung der genannten Platten ein Bindemittel einzusetzen, welches nur eine relativ geringe Klebekraft ("tack") zwischen feuchter Masse und der Prägewalze entwickelt. Es wurde gefunden, dass dies bei Polymerdispersionen der Fall ist, bei welchen ein festes, thermoplastisches Bindemittel in wässriger Dispersion vorliegt. Der Zusammenhalt in der Mineralwolle, Füllstoffe und Bindemittel enthaltenden Masse wird dann in jedem Fall grösser sein als die Klebekraft dieser Masse an der Prägewalze. So ist gewährleistet, dass die Prägewalze beim Abrollen ein Dekor mit glatter Oberfläche hinterlässt und dass dabei eventuell Flüssigkeit an der Walze mitgeführt wird, ohne jedoch Teile aus dieser Oberfläche herauszureissen.

Da verlangt wird, dass die fertigen Platten gegenüber Feuchtigkeit unempfindlich sind, können Stärkegel oder Polyvinylalkohol, welche sonst als Bindemittel dienen, wiederum nicht
verwendet werden. Im vorliegenden Fall werden somit Dispersionen als Bindemittel verwendet, die Polymerisate von thermoplastischen Harzen und Lösungen von Duroplasten enthalten.
Bei der Auswahl der Harze sind ihre Beständigkeit gegen Wasser
und gegen Feuchtigkeit sowie ihre Fähigkeit von entscheidender
Bedeutung, nach dem Einarbeiten der Mineralwolle in das angeteigte Bindemittel während des Trocknungsvorganges einen steifen, biege- und zugfesten Film zwischen den Fasern der Mineralwolle zu bilden.

Handelsübliche Polymere, welche in Form einer Dispersion als
Bindemittel angeboten werden, erwiesen sich im vorliegenden
Fall allerdings als unbrauchbar, weil sie stets hydrophile Dispergier- und Netzmittel enthalten, was unvereinbar ist mit der
Forderung nach Feuchtigkeitsbeständigkeit. Es ist eine der Erkenntnissen, auf der die vorliegenden Erfindung beruht, dass
die noch weiche Plattenmasse die gewünschten Eigenschaften nur
dann aufweist, wenn als thermoplastisches Bindemittel eine
Tensid-freies Polymerdispersion verwendet wird.

**0233477**

Solche Polymerdispersionen bedürfen immer einer Stabilisatorsubstanz, welche eine Koagulation vermeidet. Solche Substanzen
sind wasserlöslich und stellen somit einen Schwachpunkt in der
Bindung der Mineralfaserplatte dar. Als Stabilisatorsubstanz
muss deshalb eine solche gewählt werden, welche mittels eines
Hilfsstoffes in eine feuchtigkeitsbeständige Form überführt
werden kann. Die vorligende Erfindung umfasst auch die Erkenntnis, dass das Polymer mit Hilfe von Polyvinylalkohol zum genannten Zweck stabilisiert werden kann. Dem Bindemittel ist als
das genannte Hilfsmittel ferner Phenolformaldehydharz zugesetzt, welches mit dem Stabilisierungsmittel reagiert und
während der Trocknung der Plattenmasse unter Zuführung von
Wärmeenergie zu einem Duroplast polymerisiert.

Der Bindemittelbrei besteht demnach aus 5 bis 10 Gew % Polymerisat eines oder mehrerer, Tensid-freier, mit PVA stabilisierter Thermoplaste, 0,5 bis 2 Gew % von 50%igem Formaldehydharz, 5 bis 10 Gew % Ton oder einer Mischung aus Ton, Gips
und Zement oder anderer Füllstoffe, 0,1 bis 1 Gew % Dickungsmittel (Thixotropiermittel) und aus 80 bis 90 Gew % Wasser. Ein
Zusatz von 0,1 bis 1 Gew % eines Silikonöles verbessert die
Knetbarkeit der Plattenmasse und erleichtert das Einarbeiten
der granulierten Wolle in das Plattenmaterial.

Die Mischung aus Wolle und Bindemittelbrei wird in flachen Pfannen ausgebreitet, wobei die Dicke der ausgebreiteten Masse 15 bis 25 mm beträgt. Um das spätere Ausbringen der Platte aus der Form zu erleichtern, kann in diese vorgängig zum Einfüllen der Plattenmasse eine Trennfolie, z.B. aus Papier oder Aluminium, eingelegt werden. Die genannte Mischung kann jedoch auch auf andere Substrate aufgetragen werden, so dass man kaschierte Dämmplatten erhalten kann. Als Substrat kann beispielsweise eine dünne Mineralfaserplatte dienen, die nach dem sogenannten Fourdrinier-Verfahren hergestellt worden ist. Solche Mineralfaserplatten haben eine schlechtere akustische Dämmfähigkeit als die Platten aus granulierter Mineralwolle, sie haben jedoch eine bessere Biegefestigkeit, so dass sie als tragendes Substrat verwendbar sind. Ein solches Substrat ist allerdings auch schallschluckend, so dass praktisch keine nennswerten Reflexionen an der Uebergangsstelle zwischen zwei solchen Platten entstehen können.

Die ausgebreitete und noch weiche Plattenmasse wird unter eine Prägewalze geführt. Der Abstand zwischen der Oberfläche der Masse und der Walzenachse entspricht dabei dem Abstand zwischen der Walzenachse und der tiefsten Stelle des Musters in der Walzenoberfläche. Dabei bildet sich das Muster der Walze in der thixotropen Plattenmasse scharf ab. Anschliessend wird die Platte unter Zuführung von Wärmeenergie getrocknet. Hierbei polymerisiert das Formaldehydharz unter gleichzeitiger Reaktion mit der Stabilisatorsubstanz der Polymerdispersion, dem Polyvinylalkohol. Ausserdem bildet sich zwischen den Teilchen des Polymerisates der thermoplastischen Harze untereinander sowie mit den Mineralfasern und Füllstoffen eine feste Bindung durch Verschmelzen aus. Dabei wird das ursprünglich und im nassen Zustand nur durch das Thixotropiermittel geschützte Muster nun endgültig in der Oberfläche der Platte fixiert.

Die beste, d.h. exakteste Abbildung eines dreidimensionalen Musters in der feuchten Masse wurde bei folgender Mischung erreicht:
19,5 Gew % Mineralwolle, 5,6 Gew % Polymerisat von Thermoplasten, 5,6 Gew % Kaolin, 1,1 Gew % von 50%igem Phenolformaldehydharz, 0,3 Gew % Thixotropiermittel, 0,2 Gew % Silikonöl und 67,6 Gew % Wasser. Als Thermoplaste wurde sprühgetrocknetes und mit Polyvinylalkohol stabilisiertes Pulver einer Terpolymerisatdispersion aus Vinylacetat, Vinyllaurat oder Vinylversatat eingesetzt.

Die getrockneten Platten werden üblicherweise mit einem dekorativen sowie wasser- und wischfesten, eventuell auch gegen Bakterien- und Pilzbefall ausgerüsteten Farbanstrich versehen.

So hergestellte Platten eignen sich hervorragend als akustisch dämmende Platten in Feuchträumen sowie in anderen Räumlichkei-

ten. in welchen die Platten starker Verschmutzung und hoher Luftfeuchtigkeit ausgesetzt sind. Solche Platten können ohne weiteres nass gereinigt werden.

Patentansprüche

1. Akustische Dämmplatte, die granulierte Mineralwolle sowie Füllstoffe und Bindemittel enthält, dadurch gekennzeichnet, dass das Bindemittel ein Polymer ist.

2. Dämmplatte nach Anspruch 1, dadurch gekennzeichnet, dass das Bindemittel durch Trocknen aus einer Tensid-freien, stabilisierten Polymerdispersion gewonnen worden ist, welcher ein Thixotropiermittel sowie ein Formaldehydharz beigemischt wurde.

3. Dämmplatte nach Anspruch 2, dadurch gekennzeichnet, dass die Polymerdispersion durch Polyvinylalkohol stabilisiert ist.

4. Dämmplatte nach Anspruch 3, dadurch gekennzeichnet, dass das Thixotropiermittel Xantan-Gummi ist.

5. Dämmplatte nach Anspruch 1, dadurch gekennzeichnet, dass der Thermoplast ein stabilisiertes Terpolymerisat aus Vinylacetat, Vinyllaurat oder Vinylversatat dient.

6. Verfahren zur Herstellung der Dämmplatte nach Anspruch 1, dadurch gekennzeichnet, dass eine niedrigviskose Dispersion aus Polymerisaten von Thermoplasten und aus Lösungen von Duroplasten zubereitet wird, dass diese Mischung mit Hilfsmitteln thixotrop gemacht wird. dass eine solche Mischung mit der granulierten Mineralwolle und den Füllstoffen vermischt wird und dass aus dieser Masse die Platte geformt wird.

7. Verfahren nach Anspruch 6. dadurch gekennzeichnet. dass die Oberfläche der noch weichen Rohplatte mit einem Dekor versehen wird.

8. Verfahren nach Anspruch 7, dadurch gekennzeichnet, dass die Oberfläche der Rohplatte durch Prägen mit dem Dekor versehen wird.

9. Verfahren nach Anspruch 6. dadurch gekennzeichnet. dass die Masse in Formen gegossen und in diesen gestrichen wird und dass hiernach die Masse in der Forme gepresst wird.

10. Verfahren nach Anspruch 6, dadurch gekennzeichnet, dass die Masse in Formen gegossen wird. deren Boden das Dekor als Negativ enthalten.

Europäisches
Patentamt

## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl.4) |
|---|---|---|---|
| Y | DE-A-2 808 684 (H. KILL) * Ansprüche 1-3; Seite 3, Zeilen 1-4 * | 1 | C 04 B 26/04 E 04 B 1/82 // (C 04 B 26/04 C 04 B 14:38 C 04 B 24:26 |
| | --- | | C 04 B 24:30 |
| Y,D | US-A-3 246 063 (J.S. PODGURSKI) * Spalte 3, Zeilen 23-40 * | 1 | C 04 B 24:38 ) |
| | --- | | |
| A | DE-B-1 163 221 (BASF) | | |
| | --- | | |
| A | AT-B- 377 508 (ZSCHIMMER & SCHWARZ) | | |
| | --- | | |
| A | US-A-4 148 781 (H. NARUKAWA et al.) | | |
| | --- | | RECHERCHIERTE SACHGEBIETE (Int Cl 4) |
| A | FR-A-1 539 907 (CIE DE SAINT GOBAIN) | | C 04 B 26/00 C 04 B 14/00 E 04 B 1/82 C 08 J |
| | ----- | | |

Der vorliegende Recherchenbericht wurde für alle Patentansprüche erstellt.

| Recherchenort | Abschlußdatum der Recherche | Prüfer |
|---|---|---|
| DEN HAAG | 22-04-1987 | DAELEMAN P.C.A. |